# EUROPÄISCHE PATENTSCHRIFT

(11) **EP 1 840 155 B1**
(45) Veröffentlichungstag und Bekanntmachung des Hinweises auf die Patenterteilung: **28.12.2016**
(21) Anmeldenummer: 07103842.6
(22) Anmeldetag: 09.03.2007
(51) Int. Cl.: C08J 3/12, B29C 67/04

(54) **Polymerpulver, Verfahren zur Herstellung und Verwendung eines solchen Pulvers und Formkörper daraus**
Polymer powder, method for manufacturing and utilising such a powder and moulded parts made thereof
Poudre de polymère, procédé de fabrication et utilisation d'une telle poudre et corps de formage à partir de celle-ci

(30) Priorität: 01.04.2006 DE 102006015791
(43) Veröffentlichungstag der Anmeldung: 03.10.2007
(73) Patentinhaber: Evonik Degussa GmbH, 45128 Essen (DE)
(72) Erfinder: Monsheimer, Sylvia, 45721, Haltern am See (DE); Komada, Hajime, Himeji, Hyogo 670-0083 (JP); Matsui, Hideki, Himeji, Hyogo 671-1212 (JP); Nakaie, Yoshiki, Himeji, Hyogo 670-0942 (JP)

(56) Entgegenhaltungen:
- EP-A2- 1 505 108
- WO-A-02/18298
- DE-A1-102004 010 160
- DATABASE WPI Week 199248 Derwent Publications Ltd., London, GB; AN 1992-395795 XP002439630 & JP 04 296447 A (JAPAN RADIO CO LTD) 20. Oktober 1992 (1992-10-20)

## Beschreibung

### Gebiet der Erfindung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft die Verwendung eines Polymerpulvers, hergestellt aus einer Dispersion, in formgebenden Verfahren, sowie Formkörper, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen oder durch selektive Auftragung des Pulvers. Der Energieeintrag wird über elektromagnetische Strahlung erreicht.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6 136 948 und WO 96/06881 (beide DTM Corporation) beschrieben. Eine Vielzahl von Polymeren und Copolymeren wird für diese Anwendung beschrieben, wie z. B. Polyacetat, Polypropylen, Polyethylen, Ionomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

### Stand der Technik

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), Ionomer, Polyamid, oder Gemische davon eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90 % aufweist, ein zahlenmäßiges Mittel des Molekulargewichts Mn von 30 000 bis 500 000 hat und dessen Quotient Mw/Mn im Bereich von 1 bis 5 liegt.

DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

Nachteilig bei allen Verfahren ist, dass Pulver mit relativ runder Kornform eingesetzt werden müssen. Dadurch ist die Auswahl der zur Verfügung stehenden Materialien eingeschränkt. So ist es beispielsweise von Nachteil, ein durch Vermahlung erhaltenes Material zu verwenden, da die scharfen Kanten der Partikel schlechte Rieseleigenschaften verursachen. Ein automatischer Bauprozess ist erschwert, da immer wieder Riefen beim Legen der Pulverschichten entstehen, die im schlimmsten Fall zum Abbruch des Bauprozesses führen, in jedem Fall aber die Qualität der so entstehenden Bauteile verschlechtern, insbesondere die Dichte und die Oberflächenbeschaffenheit.

Auch der Fällprozess, wie in DE19747309 beschrieben, bedingt die Lösbarkeit des Polymeren in einem Lösemittel und die Ausfällbarkeit unter geeigneten Bedingungen. Amorphe Polymere sowie Copolymere sind mit den beschriebenen Methoden nicht in die Form eines Pulvers mit runden Partikeln zu bekommen. Für nicht oder nur schwer lösbare Polymere, wie beispielsweise PBT, gelten die gleichen Einschränkungen.

Weitere Prozesse zur Herstellung runder Partikel sind aus anderen Gründen auf wenige Materialien beschränkt. Als Beispiel sei die anionische Polymerisation genannt, die ein schlecht definiertes Produkt hervorbringt, und zudem die Zugabe von Additiven wie beispielsweise Stabilisatoren bereits im Herstellprozess nur insoweit ermöglicht, wie die Polymerisation nicht gestört wird.

Eine weitere Schwierigkeit besteht, wenn Additive wie beispielsweise Flammschutzmittel oder Schlagzähmodifier in dem Pulver enthalten sein müssen. Üblicherweise werden diese in Mengen über 1 Gewichtsprozent im Endprodukt benötigt, um die gewünschte Wirkung zu erzielen; dadurch verbieten sich in der Regel Prozesse wie die anionische Polymerisation oder ein Fällprozess. Beide Komponenten getrennt in Pulverform zu bringen und anschließend im Dry Blend zu vermischen hat den Nachteil, dass keine gute Durchmischung der Komponenten erreicht wird, und erst recht keine Wechselwirkungen aufgebaut werden können. So ist es für eine Schlagzähmodifizierung vorteilhaft, wenn die schlagzähe Komponente an das Basispolymer anbindet. Außerdem droht bei einer Dry-Blendmischung bei der Verarbeitung in einem Rapid Prototyping- oder Rapid Manufacturing-Verfahren wie oben beschrieben die Entmischung der beiden Komponenten, besonders, wenn die Partikel stark unterschiedlich beschaffen sind oder eine deutlich unterschiedliche Dichte aufweisen.

Die Herstellung eines Compounds sowie die anschließende Kaltvermahlung führt ebenfalls nicht zu zufriedenstellenden Ergebnissen, und zwar aus mehreren Gründen. Zum einen können die Polymere und auch die Additive durch die Compoundierung selber in Mitleidenschaft gezogen werden. Zum anderen ist die Kaltvermahlung je nach Polymer oder Additiv sehr ineffizient, so dass sich eine Kommerzialisierung eines derart hergestellten Pulvers verbietet. Beispielhaft seinen hier schlagzäh modifizierte Polymere genannt, bei denen der Schlagzähmodifier, unabhängig davon, ob er während der Compoundierung an das Polymer angebunden hat oder nicht, zu einer sehr geringen Ausbeute führt - Werte von weniger als 30 % seien beispielhaft genannt. Ebenfalls sehr schlecht vermahlbar sind Polymere, die in ihrer Polymerklasse am oberen Ende bezüglich des Molekulargewichtes liegen, was aber gerade für die mechanischen Eigenschaften von Vorteil ist.

Die Bemühungen, Pulver mit verbesserten Eigenschaften insbesondere für das Laser-Sintern zu erhalten, sind vielfältig. Beispielsweise werden hierzu Vorschläge gemacht in DE 102 56 097 A1, WO 2004/050746 A1 und WO 2005/090448 A1. Unter anderem wird in der DE 102 56 097 A1 auf die EP 0 863 174 Bezug genommen, in der ein Verfahren zur Herstellung eines Polyamidpulvers durch Fällung aus alkoholischer Lösung beschrieben sein soll mit den durch einen Fällungsprozess erzielbaren für das Lasersintern relevanten Eigenschaften.

Aus der EP 1 512 725 A1 ist eine Dispersion einer Harzkomponente und einer wasserlöslichen Hilfskomponente und ein Herstellverfahren für eine solche Dispersion bekannt, wobei als Harzkomponente insbesondere ein thermoplastisches Harz oder ein wasserunlösliches Harz vorgeschlagen wird. Als Hilfskomponente wird ein Oligosaccharid, ein Saccharid oder Zuckeralkohole vorgeschlagen. Weiterhin sind aus der genannten Druckschrift Erzeugnisse bekannt, die unter Verwendung der Dispersion hergestellt sind, insbesondere wird die Herstellung hochporösen Materials oder Partikel beschrieben.

Das in der EP 1 512 725 A1 beschriebene Verfahren und die Dispersion ist jedoch nur für Harzkomponenten sinnvoll einsetzbar, die eine mäßig hohe Schmelztemperatur aufweisen. Für höherschmelzende Harze eignet sich das Verfahren nicht, da es bei höheren Temperaturen als ca. 230 °C aufgrund von Zersetzungsreaktionen in dem als Hilfskomponente einzusetzenden Oligosaccharids zu einer Verfestigung der Mischung kommt, die nicht mehr dispergierbar ist.

### Beschreibung der Erfindung

Der vorliegenden Erfindung liegt daher die Aufgabe zugrunde, ein Pulver und ein Herstellverfahren bereitzustellen, das eine breitere Anwendung von Verfahren zur schichtweisen werkzeuglosen Herstellung von dreidimensionalen Formkörpern ermöglicht, sowohl was die Auswahl der verwendbaren Werkstoffe, als auch die Wirtschaftlichkeit betrifft.

Diese Aufgabe wird erfindungsgemäß gelöst durch ein Verfahren zur Herstellung eines Pulvers, geeignet zur Verwendung in einem Verfahren zur schichtweisen werkzeuglosen Herstellung von dreidimensionalen Formkörpern, bei dem selektiv Bereiche der jeweiligen Pulverschicht durch den Eintrag elektromagnetischer Energie aufgeschmolzen werden, wobei das Herstellungsverfahren das Mischen eines Polymers oder Copolymers mit zumindest einem wasserlöslichen polymeren Polyol, das Lösen der Mischung in Wasser zur Bildung einer Dispersion, die Abtrennung der Polymer- oder Copolymer-Partikel aus der Dispersion, das Waschen und Trocknen der abgetrennten Polymer- oder Copolymer-Partikel umfasst, wobei das polymere Polyol ausgewählt ist aus einer Gruppe bestehend aus Polyethylenglykol und Polyvinylalkohol.

Durch das erfindungsgemäße Verfahren ist es nunmehr möglich, auch hochschmelzende Polymere oder Copolymere preisgünstig zu einem für das genannte Formgebungsverfahren geeigneten Pulver zu verarbeiten, insbesondere zum Beispiel höher schmelzende Polyamide. Die Beschränkung der Verarbeitbarkeit von höher schmelzenden Polymeren oder Copolymeren, die sich aus dem aus EP 1 512 725 A1 bekannten Verfahren infolge der Zersetzung der Hilfskomponente ergibt, entfällt bei dem erfindungsgemäßen Verfahren.

Weiterhin ergibt sich gegenüber dem aus der EP 1 512 725 A1 bekannten Verfahren der Vorteil, dass eine bräunliche Verfärbung des Pulvers durch Reaktionsvorgänge innerhalb der wasserlöslichen Hilfskomponente vermieden wird. Schließlich hat sich herausgestellt, dass mit dem erfindungsgemäßen Verfahren eine Aufbereitung des wasserlöslichen Hilfsstoffes sehr viel kostengünstiger realisiert werden kann und auch eine endgültige Entsorgung umweltfreundlicher und kostengünstiger durchzuführen ist.

In einer bevorzugten Ausführungsform erfolgt das Waschen des aus den abgetrennten Polymer- oder Copolymerpartikeln gebildeten Pulvers bis zu einem Gehalt von 0,001 Gew.-% bis 5 Gew.-% des Polyols, bezogen auf die Polymer- oder Copolymerpartikel. Die Erfinder haben überraschend festgestellt, dass ein gewisser Gehalt an Polyethylenglykol oder Polyvinylalkohol im fertigen Pulver für den weiteren Gebrauch des Pulvers vorteilhaft ist. Durch diese erfindungsgemäße Weiterbildung des Verfahrens kann der Aufwand für das Auswaschen des Hilfsstoffes gegenüber dem bekannten Verfahren wesentlich verringert werden, was einerseits durch kürzere Herstellzeiten die Herstellungskosten senkt, aber insbesondere auch zu einem deutlich geringeren Wasserverbrauch führt.

Als zweckmäßig hat sich bei einer bevorzugten Ausführungsform der Erfindung herausgestellt, wenn das abgetrennte Pulver mit einem pulverförmigen Füllstoff vermischt wird, wobei der Anteil des Füllstoffes an der Gesamtmenge des Pulvers bis zu 70 Vol.-% beträgt. Dadurch lassen sich bestimmte mechanische Eigenschaften eines aus dem Pulver hergestellten Formkörpers einstellen.

Es hat sich weiterhin als zweckmäßig herausgestellt, dass das Gewichtsverhältnis des Polymers oder des Copolymers und des zumindest einen wasserlöslichen Polyols in der Dispersion zwischen 1 : 99 und 91 : 9 liegt, vorzugsweise von 1 : 5 bis 2 : 1 beträgt.

Die Aufgabe wird erfindungsgemäß ferner gelöst durch ein Pulver der eingangs erwähnten Art, wobei das Pulver ein Polymer- oder Copolymerpulver umfasst mit einem Gehalt von 0,001 Gew.-% bis 5 Gew.-% eines polymeren Polyols, wobei das polymere Polyol ausgewählt ist aus einer Gruppe bestehend aus Polyethylenglykol und Polyvinylalkohol.

Die Erfinder haben herausgefunden, dass überraschenderweise eine solcher Gehalt von Polyethylenglykol und/oder Polyvinylalkohol besondere Vorteile hinsichtlich der Eigenschaften des Pulvers mit sich bringt, obwohl im Stand der Technik davon ausgegangen wird, dass Anteile an wasserlöslichen Komponenten in dem Pulver für die Verarbeitung, insbesondere beim Lasersintern, nachteilig sind und zu Störungen des Lasersinterprozesses bzw. zu Mängeln bei einem damit hergestellten Formkörper führt.

Tatsächlich haben die Erfinder herausgefunden, dass durch den genannten Gehalt an Polyolen das Pulver insgesamt eine bessere Rieselfähigkeit erlangt und somit zuverlässiger auch automatisch dosiert werden kann. Weiterhin lässt sich gegenüber einem Pulver ohne einen solchen Anteil bei vergleichbarer Korngrößenverteilung eine höhere Schüttdichte erhalten und damit eine geringere Porosität eines durch Lasersintern hergestellten Formkörpers. Dies wiederum führt zu verbesserten Oberflächeneigenschaften sowie zu besseren mechanischen Eigenschaften des daraus hergestellten Formkörpers. Weiterhin ermöglicht dieser Gehalt, bei Pulvern nach dem Stand der Technik zugesetzte trockene Rieselhilfsmittel zu vermeiden oder die benötigte Menge zu vermindern, die sich nachteilig auf das Verarbeitungsfenster auswirken.

Weiterhin haben die Erfinder herausgefunden, dass für die Anwendung im Lasersintern auch eine höhere Wiederverwendbarkeit des Pulvers gegeben ist. Bei dem Lasersintern oder einem der anderen eingangs genannten Verfahren zur schichtweisen werkzeuglosen Herstellung von dreidimensionalen Formkörpern wird dieser Formkörper innerhalb eines geschütteten Betts aus Pulver gebildet. Dabei wird der Formkörper während seiner Erstellung durch das umgebende nicht erweichte bzw. nicht belichtete Pulver gestützt. Nach dem Fertigstellen des Formkörpers wird dieser dem Pulverbett entnommen. Das verbliebene Pulver kann grundsätzlich für einen nächsten Arbeitsgang wiederverwendet werden. Es muss dann lediglich der Teil an Pulver ergänzt werden, der durch die Bildung des Formkörpers verloren gegangen ist. In der Praxis ist es allerdings so, dass durch den Eintrag von elektromagnetischer Strahlung in das Pulverbett eine Wechselwirkung auch mit den nicht aufgeschmolzenen und zu dem Formkörper verarbeiteten Pulverbestandteilen führt. Dies wird im Fachgebrauch als "Alterung" bezeichnet. Infolge dieser "Alterung" verschiebt sich das Verarbeitungsfenster des Pulvers. Dies führt dazu, dass der Temperaturbereich, in dem die Polymer- oder Copolymerkomponente des Pulvers aufzuschmelzen beginnt, sich verschiebt bzw. erweitert. Dadurch lassen sich in den Bereichen, die die Oberfläche des Formkörpers bilden sollen, durch die Wärmeleitung mit Pulver, das eigentlich nicht mehr aufgeschmolzen werden soll, nicht mehr so saubere und konturenscharfe Oberflächen erreichen, wie mit frischem Pulver. Dadurch nimmt insgesamt die Qualität eines damit hergestellten Formkörpers ab. Je nach Anwendungsbereich muss daher ein bestimmter Anteil an frischem Pulver verwendet werden, um eine ausreichende Qualität des Formkörpers zu erhalten. Dies wird im Stand der Technik auch als "Auffrischfaktor" bezeichnet, vgl. DE 102 56 097 A1. Ein hoher "Auffrischfaktor" bedeutet in der Praxis, dass ein erheblicher Teil eines noch nicht verbauten Pulvers aufgrund der Alterung nicht mehr verwendet werden kann und ungenutzt entsorgt werden muss. Dadurch, dass mit dem erfindungsgemäßen Pulver die Alterung wesentlich herabgesetzt ist, lässt sich ein Verlust an ungenutztem Pulver deutlich reduzieren und damit die Wirtschaftlichkeit bei der Herstellung eines Formkörpers aus diesem Pulver deutlich verbessern.

Zur Einstellung bestimmter mechanischer Eigenschaften eines aus dem erfindungsgemäßen Pulver herzustellenden Formkörpers ist es zweckmäßig, wenn das Pulver einen pulverförmigen Füllstoff enthält, wobei der Anteil des Füllstoffs an der Gesamtmenge des Pulvers bis zu 70 Vol.-% beträgt.

Zweckmäßigerweise weist das Pulver einen mittleren Korndurchmesser zwischen 5 µm und 100 µm auf, vorzugsweise zwischen 8 µm und 80 µm. Mit einem solchen Korndurchmesser ergibt sich eine besonders gute Verarbeitbarkeit zur Herstellung eines Formkörpers durch Lasersintern.

Das Pulver weist eine BET-Oberfläche gemessen nach DIN ISO 9277 auf, die kleiner oder gleich 10 m²/g ist, vorzugsweise kleiner oder gleich 3 m²/g, besonders bevorzugt kleiner oder gleich 1 m²/g ist. Dies ermöglicht die Herstellung eines besonders porenarmen Formkörpers und damit eine hohe Zuverlässigkeit hinsichtlich der Erreichung bestimmter Festigkeitswerte eines mit diesem Pulver hergestellten Formkörpers.

Zweckmäßig weist das Pulver eine Schüttdichte nach DIN 53466 zwischen 300 g/l und 700 g/l auf. Eine hohe Schüttdichte des Pulver erlaubt eine hohe Dichte eines daraus hergestellten Formkörpers und damit die Herstellung mechanisch besonders stabiler Formkörper.

Es hat sich als zweckmäßig, insbesondere für die Verwendung beim Lasersintern, herausgestellt, wenn das Pulver eine Kormgrößenverteilung d90:d10 zwischen 3:1 und 15:1 aufweist.

Weiterhin ist es zweckmäßig, wenn das Pulver, soweit überhaupt noch nötig, Rieselhilfsmittel enthält. Zweckmäßig enthält das Pulver als Füllstoff anorganische Partikel, insbesondere eignen sich dafür Glas-, Metall- oder Keramikpartikel, wie zum Beispiel Glaskugeln, Stahlkugeln oder Metallgrieß, zum Erzielen bestimmter gewünschter mechanischer, elektrischer oder magnetischer Eigenschaften.

Weiterhin können organische und/oder anorganische Pigmente beigegeben werden, wobei insbesondere Titandioxid oder Ruß erwähnt sein sollen. Dadurch kann auch das Absorptionsverhalten des Pulvers beeinflusst werden.

Soweit in dieser Anmeldung der Begriff "Polyethylenglykol" verwendet wird, so sollen damit alle Formen des Polyethylenglykols gemeint sein, unabhängig von der Molmasse. Insbesondere sollen mit dem Begriff "Polyethylenglykol" nicht nur solche bezeichnet sein, die bei Normbedingungen flüssig vorliegen, sondern auch höher molare feste Polyethylenglykole, die gelegentlich auch als Polyethylenoxide bezeichnet und mit dem Kurzzeichen PEOX abgekürzt werden. Die übliche Abkürzung für Polyethylenglykol ist PEG. Das Kurzzeichen für die in dieser Anmeldung erwähnten Polyvinylalkohle ist PVA nach ASTM, ansonsten auch als PVAL abgekürzt.

Erfindungsgemäß besonders vorteilhaft ist es, wenn das Polyethylenglykol eine Molmasse von 2000 bis 2000000 g/mol, vorzugsweise von 7000 bis 250000 g/mol, besonders bevorzugt von 9000 bis 100000 g/mol aufweist, insbesondere, wenn das Polyethylenglykol eine Mischung aus Polyethylenglykolen unterschiedlicher Molmassen enthält.

Weiterhin haben die Erfinder herausgefunden, dass sich durch die Verwendung einer Mischung aus Polyethylenglykolen unterschiedlicher Molmassen die Schmelzviskosität einstellen lässt und weiter, dass dadurch die Partikelgröße des erzeugten Pulvers in Abhängigkeit von dem eingesetzten Polymer- oder Copolymerpulver einstellbar ist. Dies ist besonders vorteilhaft, da so ein erfindungsgemäßes Pulver in der gewünschten Korngröße mit einer hohen Ausbeute besonders wirtschaftlich herstellbar ist.

In einer besonders bevorzugten Ausführungsform des erfindungsgemäßen Verfahrens und/oder Pulvers enthält das Polymer- oder Copolymer ein PEEK (Polyetherketon), ein PAEK (Polyaryletherketon), ein PSU (Polysulfon), ein PPSU (Polyphenylensulfon), ein Polyamid, oder Mischungen daraus. Vorzugsweise ist das Polyamid ein höherschmelzendes Polyamid, ein PA1010, ein PA610, ein PA6, ein PA66, ein PA46, ein aliphatisches oder aromatisches Polyester, ein aliphatisches, cycloaliphatisches oder aromatisches Polyamid, ein Copolyamid, oder Mischungen daraus.

Wirtschaftlich besonders sinnvoll verwerten lässt sich die Erfindung durch die Verwendung eines erfindungsgemäßen Pulvers in einem Verfahren zur schichtweisen werkzeuglosen Herstellung von dreidimensionalen Formkörpern, bei dem selektiv Bereiche der jeweiligen Pulverschicht durch den Eintrag elektromagnetischer Energie aufgeschmolzen werden, und bei einem solchermaßen hergestellten Formkörper. Ein solcher Formkörper kann einen Gehalt von 0,0005 Gew.-% bis 5 Gew.-% an Polyol aufweisen.

### Beschreibung von Ausführungsbeispielen der Erfindung

Die Erfindung soll nachfolgend anhand einiger Beispiele näher erläutert werden. Das erfindungsgemäße Herstellverfahren, das erfindungsgemäße Pulver sowie dessen erfindungsgemäße Verwendung wird nachfolgend beschrieben, ohne dass die Erfindung darauf beschränkt sein soll. Der Begriff Polymer schließt hier auch Copolymere ein.

Die Verwendung von Polymerpulver, hergestellt aus einer Dispersion, hat den Vorteil, dass aus ihm durch ein schichtweise arbeitendes Verfahren, bei dem selektiv Bereiche der jeweiligen Schicht aufgeschmolzen werden, hergestellte Formkörper mit Polymeren bzw. Copolymeren gebildet werden können, die sich bisher der Verarbeitbarkeit in den zum Stand der Technik erläuterten Verfahren verschlossen haben. Damit können ganz andere Eigenschaften erschlossen werden, als bisher möglich. So können beispielsweise Copolymere oder amorphe Polymere zur Erzielung von Transparenz oder Schlagzähigkeit an den Formkörpern nun in den beschriebenen Verfahren eingesetzt werden. Dies gilt insbesondere für solche Polymer und Copolymere, die einen höheren Schmelzpunkt als typischerweise 230 °C aufweisen.

Neben den als erfindungsgemäß besonders bevorzugt genannten Polymeren, kann auch ein anderes wasserunlösliches Polymeres oder ein thermoplastisches Polymer oder ein Duromer oder auch Kombinationen daraus eingesetzt werden. Beispiele für das thermoplastische Polymer sind Polykondensate wie Polyester, aliphatisch oder aromatisch, Polyamide, Copolyamide, Polyurethane, Poly-(thio)-ether, Polycarbonat, Polysulfon, Polyimid, aber auch Polymerisate wie Poylolefine, Methacrylate, Polystyrol, vinylbasierende Polymere, sowie Produkte, die von Naturstoffen abgeleitet sind wie beispielsweise Cellulosederivate. Auch Copolymere seien erwähnt. Beispiel für das Duromer sind Epoxyharze, ungesättigte Polyester, Diallylphtalate, sowie Silicone. Besonders erwähnt seien thermoplastische Elastomere, beispielsweise auf Basis von Polyamid, Polyester, Polyvinylchlorid, oder Fluorpolymeren. Ebenfalls erwähnt werden Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, Polylactide, Polyoxyalkylene, Poly-(N-methylmethacrylimide) (PMMI), Polymethylmethacrylat (PMMA), Ionomer, Silikonpolymere, Terpolymere, Acrylnitril-Butadien-Styrol-Copolymere (ABS) oder Gemische davon.

Als lösliche Hilfskomponente kommt vorzugsweise ein mit dem Polymer inkompatibles wasserlösliches Matrixmaterial zur Anwendung, wie ein Polyethylenglykol oder ein Polyvinylalkohol. PEG ist sehr gut wasserlöslich und daher kann eine Dispersion damit leicht und kostengünstig hergestellt werden, sowie das PEG einfach und wenig umweltbelastend ausgewaschen werden. Denkbar wäre auch der Einsatz einer in organischen Lösungsmitteln löslichen Hilfskomponente, insbesondere in Verbindung mit einem Polyamid als Polymer. Der Einsatz organischer Lösungsmittel hat jedoch verschiedene Nachteile in Bezug auf Umweltbelastung und Entsorgungskosten.

Wenn nötig, kann die Dispersion weitere Additive aufweisen. Beispielhaft seien Füllstoffe, Stabilisatoren, Verdickungsmittel, Farben (Pigmente), Gleitmittel, Dispersionshilfe, Antistatikmittel, oder Flammschutzadditive genannt. Die Füllstoffe können Glimmer, Ton, Talkum oder auch Rayonfasern sein, ohne die Erfindung darauf beschränken zu wollen. Besonders seinen Glaskugeln oder -fasern genannt, Carbonfasern, auch gemahlen, und Metallpartikel.

Die Dispersion kann hergestellt werden, indem die Polymerkomponente mit der Hilfskomponente verknetet wird. Der Knetprozess kann durchgeführt werden in einem konventionellen Kneter (beispielsweise im Ein- oder Doppelschneckenextruder, oder im Kneter oder Kalander). Es kann vorteilhaft sein, die Polymerkomponente und/oder die Hilfskomponente schon zuvor durch Kaltmahlen oder Vorkneten in eine pulverähnliche Form zu bringen. Bevorzugt liegt die Knet- oder Umformtemperatur zwischen 90 und 400 °C, besonders bevorzugt zwischen 110 und 260 °C, und ganz besonders bevorzugt über 140 °C. Anders als im Stand der Technik besteht bei der vorliegenden Erfindung keine Begrenzung im Bereich von 230 °C um eine thermische Zersetzung der Hilfskomponente, wie sie bei Oligosaccharid auftritt, zu vermeiden.

Das disperse System (eine Form, in der die Polymerkomponente und die Hilfskomponente in disperser Form vorliegen) kann durch Abkühlen einer aufgeschmolzenen Mischung erzeugt werden (beispielsweise aus dem Kneter), wobei die aufgeschmolzene Mischung die Polymerkomponente und die Hilfskomponente aufweist. Die Abkühltemperatur sollte wenigstens 10 °C unter der Wärmeformbeständigkeit der Polymerkomponente liegen, oder unter dem Schmelz- oder Erweichungspunkt der Hilfskomponente.

Die Abkühlzeit wird auf die Polymerkomponente und die Hilfskomponente abgestimmt, ein weiterer Einflussfaktor ist die Abkühltemperatur; die Abkühlzeit kann beispielsweise in einem weiten Bereich zwischen 30 Sekunden und 20 Stunden liegen. Beispiele für bevorzugte Zeiten sind 1,5 bis 30 Minuten.

Besonders in den Fällen, in denen die Polymer- und die Hilfskomponente kompatibel zueinander sind, kann das disperse System dadurch erhalten werden, dass unterschiedliche Zustände der Oberflächenspannung und Verfestigung, beispielsweise durch Kristallisation, ausgenutzt werden, um während des Abkühlens das disperse System auszubilden.

Bei einem Partikel kann die durchschnittliche Porengröße bzw. die Partikelgröße beeinflusst werden durch Abstimmung der Kompatibilität zwischen Polymer- und Hilfskomponente, durch den Viskositätsunterschied zwischen den Komponenten, durch die Knet- bzw. Umformbedingungen, sowie die Abkühlbedingungen, so dass sich ein weiter Bereich zur Einstellung von Porengröße und Porenverteilung bzw. von Partikelgröße und Partikelgrößenverteilung ergibt.

Das disperse System wird mit einer Lösung zusammengebracht, um die Hilfskomponente von der Polymerkomponente zu trennen oder auszuwaschen. Das bevorzugte Lösemittel ist Wasser, es ist preiswert und umweltfreundlich. Die Abtrennung der Hilfskomponente kann unter Umgebungsdruck, einem erhöhten Druck oder unter Vakuum durchgeführt werden. Die Temperatur beim Abtrennen der Hilfskomponente hängt von den Komponenten ab und liegt beispielsweise zwischen 10 und 100 °C.

Die Partikel werden beispielsweise durch Filtration oder Zentrifugalkraft gesammelt. Es ist vorteilhaft, den Gehalt an Polyethylenglykol in dem abgetrennten und getrockneten Pulver im Bereich von 0,001 Gew.-% bis 5 Gew.-%, bezogen auf die Polymer- oder Copolymer-Partikel zu erhalten.

Die Partikel, die durch Abtrennen der Hilfskomponente entstehen, bilden ein Pulver vorzugsweise runder Form.

Zu Erzeugung von Partikeln mit einem erfindungsgemäßen mittleren Korndurchmesser wird bevorzugt mit einem Gewichtsverhältnis der Polymerkomponente und der wasserlöslichen Hilfskomponente zwischen 1:99 und 91:9 gearbeitet. Gegebenenfalls wird eine Schutzsiebung und weitere Klassierung des so erhaltenen Pulvers angeschlossen. Auch eine Nachbehandlung in einem schnelllaufenden Mischer zur weiteren Verrundung der Partikel kann Vorteile bringen. Bei dem erfindungsgemäßen Pulver ist die Zugabe einer gesonderten Rieselhilfe nach dem Stand der Technik kaum erforderlich.

Der Fachmann kann die Bedingungen für die Verarbeitung im erfindungsgemäßen pulverbasierenden werkzeuglosen Herstellverfahren leicht durch orientierende Vorversuche herausfinden.

Die BET-Oberfläche liegt bei dem aus der Dispersion hergestellten Pulver kleiner als 10 m²/g, bevorzugt kleiner als 3 m²/g und besonders bevorzugt kleiner als 1 m²/g. Der mittlere Korndurchmesser d₅₀ liegt bevorzugt zwischen 5µm und 100 µm, besonders bevorzugt zwischen 8 µm und 80 µm.

Die Viskosität des Polymeren muss so bemessen sein, dass eine Verarbeitung im erfindungsgemäßen Verfahren gut möglich ist. Verallgemeinert eignet sich ein eher niedrigviskoses Material besser; Molekulargewichte wie beim Spritzguss für das jeweilige Polymer üblich, sind den für die Extrusion optimierten Materialien vorzuziehen. Bei der Umwandlung in eine pulvrige Form mit Hilfe des oben beschriebenen Verfahrens kann das Molekulargewicht des Ausgangsstoffes sich verändern; dabei sind sowohl Abweichungen nach oben als auch nach unten in den Experimenten festgestellt worden.

Die Kornverteilung der so erhaltenen Pulver ist relativ breit; D90 zu D10 liegt zwischen 3 : 1 und 15 : 1, bevorzugt zwischen 4 : 1 und 10 : 1, kann jedoch auch eng oder bimodal sein. Die Schüttdichte der erfindungsgemäßen Pulver liegt bevorzugt im Bereich zwischen 300 und 700 g/l. Die BET-Oberfläche kann durch Gasadsorption nach dem Prinzip von Brunauer, Emmet und Teller ermittelt werden; die herangezogene Norm ist DIN ISO 9277.

Erfindungsgemäße Pulver zur Verwendung in einem erfindungsgemäßen Verfahren können außerdem Hilfsstoffe und/oder Füllstoffe und/oder weitere organische oder anorganische Pigmente aufweisen. Solche Füllstoffe können z. B. Glas-, Metall- oder Keramikpartikel, wie z. B. Glaskugeln, Stahlkugeln oder Metallgrieß, oder Fremdpigmente, wie z. B. Übergangsmetalloxide, sein. Die Pigmente können beispielsweise Titandioxidpartikel basierend auf Rutil (bevorzugt) oder Anatas sein oder Rußpartikel. Auch die Zugabe von Absorbern, die die Verarbeitung im erfindungsgemäßen Verfahren erleichtern kann, soll hier erwähnt werden. Als besonders vorteilhaft hat sich die Zugabe von Ruß erwiesen.

Die Füllstoffpartikel weisen dabei vorzugsweise eine kleinere oder ungefähr gleich große mittlere Partikelgröße wie die Partikel des Polymerpulvers auf. Vorzugsweise sollte die mittlere Partikelgröße d₅₀ der Füllstoffe die mittlere Partikelgröße d₅₀ des Polymerpulvers um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/Rapid Manufacturing-Anlage.

Es ist ebenso möglich, herkömmliche Polymerpulver mit Polymerpulvern hergestellt in einer Dispersion wie oben beschrieben zu mischen. Auf diese Weise lassen sich Polymerpulver mit einer weiteren Kombination von Oberflächeneigenschaften herstellen. Das Verfahren zur Herstellung solcher Mischungen kann z. B. DE 34 41 708 entnommen werden. Besonders vorteilhaft wird dabei das mittels Dispersion hergestellte Polymerpulver, welches eine eher runde Partikelform aufweist, mit einem durch Kaltvermahlung erhaltenen Polymerpulver, dessen Partikel deutlich scharfkantiger sind, gemischt. Dabei wirkt das durch die Dispersion hergestellte Polymerpulver wie eine Rieselhilfe, so dass die dem Mahlpulver zuzuordnenden Verarbeitungsschwierigkeiten durch die Verwendung einer solchen Mischung vermieden werden können. Vorteilhaft sind Mischungen, die zumindest 30 % Polymerpulver hergestellt aus einer Dispersion wie oben beschrieben, aufweisen, besonders vorteilhaft Mischungen, die zumindest 40 % davon aufweisen, und ganz besonders vorteilhaft sind Mischungen, die zumindest 50 % eines solchen Polymerpulvers aufweisen.

Zur Verbesserung der Verarbeitungsfähigkeit oder zur weiteren Modifikation des Polymerpulvers können diesem anorganische Fremdpigmente, wie z. B. Übergangsmetalloxide, Stabilisatoren, wie z. B. Phenole, insbesondere sterisch gehinderte Phenole, sowie Füllstoffpartikel zugegeben werden.

Gegenstand der vorliegenden Erfindung ist auch die Verwendung eines erfindungsgemäßen Pulvers in einem Verfahren zur Herstellung von Formkörpern durch schichtweise arbeitende Verfahren, bei denen selektiv Bereiche der jeweiligen Schicht aufgeschmolzen werden, unter Verwendung von erfindungsgemäßen Pulvern. Die Energie wird dabei durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10600 nm oder zwischen 800 und 1060 nm. Die Quelle der Strahlung kann beispielsweise ein Mikrowellengenerator, ein geeigneter Laser, ein Heizstrahler oder eine Lampe sein, aber auch Kombinationen davon. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen. Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinander folgende Versinterung von Schichten von Polymerpartikeln werden dreidimensionale Objekte hergestellt. Einzelheiten zum Verfahren des selektiven Laser-Sinterns sind z. B. den Schriften US 6,136,948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682, DE 10 2004 012 683 und DE 10 2004 020 452 beschrieben.

Anwendungsgebiete für erfindungsgemäße Formkörper sind sowohl im Rapid Prototyping als auch im Rapid Manufacturing zu sehen. Mit letzterem sind insbesondere Kleinserien gemeint, also die Herstellung von mehr als einem gleichen Teil, bei dem aber die Produktion mittels eines Spritzgießwerkzeugs nicht wirtschaftlich ist, vor Allem, wenn die Teile eine sehr komplexe Gestaltung aufweisen. Beispiele hierfür sind Teile für hochwertige PKW, Rennoder Rallyefahrzeuge, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Teile gehen, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die Schmelzpunkte können mittels DSC (Differential Scanning Calorimetry) nach DIN 53765, bzw. nach AN-SAA 0663 bestimmt werden. Die Lösungsviskosität kann nach DIN EN ISO 307 in 0,5%iger m-Kresollösung ermittelt werden. Die Schüttdichte ist mit einer Apparatur gemäß DIN 53 466 zu ermitteln.

Die folgenden Beispiele und Versuchsergebnisse verdeutlichen die Vorzüge der Erfindung.

Für die Beispiele und Versuche wurden als Polymer- oder Copolymerkomponente verschiedene Polyamid-Formmassen gemäß Tabelle 1 eingesetzt.

**Tabelle 1**

| Material | Schmelzpunkt (°C) | Relative Lösungsviskosität |
|---|---|---|
| VA Z | 178 | 1.6 |
| VAE | 150 | 1.9 |
| TG CX | 250 | 1.9 |

Darin bezeichnet VA Z ein niedrigviskoses PA12-Basispolymer. Ein solches PA12-Basispolymer ist kommerziell erhältlich von der DEGUSSA AG, Marl, Deutschland, unter der Bezeichnung Vestamid L1600. Die Bezeichnung nach ISO 1874-1 lautet: PA12,XN,12-010. Mit VA E ist ein PA12-Elastomer bezeichnet, wie es kommerziell erhältlich ist von der DEGUSSA AG, Marl, Deutschland, unter der Bezeichnung Vestamid E40. Das als TG CX bezeichnete Material ist ein mittelviskoses Polyamid, geeignet für optische Anwendungen, erhältlich von der DEGUSSA AG, Marl, Deutschland, unter der Bezeichnung Trogamid CX7323. Vestamid und Trogamid sind eingetragene Marken der DEGUSSA AG.

Als Hilfskomponente wurden wasserlösliche Polyethylenglykole gemäß Tabelle 2 und Mischungen der genannten Polyethylenglykole eingesetzt.

**Tabelle 2**

| Material | Mn | Viscosität(Pas) | Schmelzpunkt (°C) |
|---|---|---|---|
| PEG 20M | 20000 | 3 | 65 |
| PEG LE | 65000 | 430 | 74 |
| PEG R150 | 43000 | 180 | 65 |

Mit PEG 20M ist ein von der Firma NOF Cooperation, Japan, kommerziell erhältliches Polyethylenglykol bezeichnet, die mit PEG LE und PEG R150 bezeichneten Polyethylenglykole sind kommerziell erhältlich von der Firma Meisei Chemical Works, LTD, Japan.

Polymer- und Hilfskomponente wurden gemischt und in einem Extruder verknetet. Als Extruder wurde ein Doppelschneckenextruder der Type JSW TEX30-SST mit einem Schneckendurchmesser von 30 mm eingesetzt. Temperaturbedingungen, Schneckendrehzahl und durchgesetzter Massenstrom sind aus der Tabelle 3 zu entnehmen.

**Tabelle 3**

| Material | Temperatur (°C) | | | Harztemp. (°C) | Schneckendrehzahl (1/min) | Massenstrom (kg/h) |
|---|---|---|---|---|---|---|
| | Füllzone | Mischzone | Düse | | | |
| VA Z | 50 | 190 | 190 | 192 | 239 | 7 |
| VAE | 50 | 190 | 190 | 193 | 239 | 7 |
| TG CX | 50 | 270 | 270 | 278 | 239 | 7 |

Der in dem Extruder verknetete Strang wurde nach dem Austreten aus dem Extruder gekühlt und in Wasser gelöst. Die Konzentration der Lösung betrug 10%. Eine Mischung aus PEG-Lösung und dispergiertem Pulver wurde erhalten. Diese Dispersion wurde gefiltert und das abgefilterte Pulver wurde mit Wasser mehrfach gewaschen, um das PEG größtenteils zu entfernen. Das gewaschenen Pulver wurde mit einem Vibrationstrockner bei 80 °C über 6 Stunden getrocknet und mit einem Sichter klassifiziert.

Die verwendeten Mischungen und die mittlere Korngröße des erhaltenen Pulvers ist in Tabelle 4 angegeben. Die Bestandteile der jeweiligen Mischung sind in Gewichtsteilen angegeben.

**Tabelle 4**

| Material (PA) | Matrix | | | PA | Korngröße (µm) |
|---|---|---|---|---|---|
| | PEG LE | PEG 20M | PEG R150 | | |
| VA Z | 10 | 90 | | 50 | 25 |
| VA Z | 5 | 95 | | 50 | 33 |
| VA Z | | 100 | | 50 | 31 |
| VA Z | | 90 | 10 | 50 | 8.6 |
| VA Z | 10 | 90 | | 60 | 21 |
| VA Z | 10 | 90 | | 90 | 17 |
| VAE | 10 | 90 | | 50 | 13 |
| TG CX | 20 | 80 | | 50 | 60 |
| TG CX | 30 | 70 | | 50 | 30 |
| TG CX | 50 | 50 | | 50 | 15 |
| TG CX | 30 | 70 | | 60 | 28 |

Für die Mischung, die in Zeile neun der Tabelle 4 angegeben ist, wurde bei dem erhaltenen Pulver eine Schüttdichte von 464 g/l gemessen.

Die Daten in Tabelle 4 zeigen die hervorragenden Ergebnisse des erfindungsgemäßen Herstellverfahrens und die besondere Eignung der erhaltenen Pulver für das Laser-Sintern. Weiterhin ist erkennbar, dass sich mit dem erfindungsgemäßen Verfahren niedrig und hochschmelzende Polymere, insbesondere Polyamide, zu erfindungsgemäßen Pulvern verarbeiten lassen. Das gleiche gilt für Polyamide unterschiedlicher relativer Lösungsviskosität.

Schließlich zeigen die Daten sehr eindrucksvoll, dass sich durch die Mischung von PEGs unterschiedlicher Molmassen, insbesondere die Einstellung des Mischungsverhältnisses von PEGs unterschiedlicher Molmassen und der Polymer- oder Copolymerkomponente, die mittlere Korngröße des erhaltenen Polymerpulvers sehr genau und praktisch über den ganzen für das Laser-Sintern vorteilhaften Korngrößenbereich steuern lässt.

Weiter haben Versuche gezeigt, dass ein gewisser Anteil an PEG im fertigen Polymerpulver vorteilhafte Wirkungen für die Verwendung beim Laser-Sintern von Formkörpern mit sich bringt, und es anders als bei der bisher vertretenen Meinung nicht erforderlich ist, die Hilfskomponente möglichst rückstandsfrei aus dem Pulver entfernen zu müssen. Auch besteht nicht die Gefahr einer bräunlichen Verfärbung des Pulvers infolge von thermisch initiierten unerwünschten Reaktionen der Hilfskomponente, wie z. B. bei der bekannten Verwendung eines Oligosaccharids als Bestandteil der Hilfskomponente zu beobachten ist.

Durch die vorgenannten und die weiter oben erörterten Vorteile der Erfindung lässt sich der materialbezogene Anwendungsbereich der bekannten Verfahren zur schichtweisen werkzeuglosen Herstellung von dreidimensionalen Formkörpern deutlich erweitern. Weiterhin bringt das erfindungsgemäße Herstellverfahren eine deutliche wirtschaftliche Verbesserung. Insbesondere zusammen mit den vorteilhaften Eigenschaften des erfindungsgemäßen Pulvers lässt sich der Einsatzbereich solcher Formverfahren, insbesondere des Laser-Sinterns, wesentlich erweitern hin zu weniger hochpreisigen Formkörpern bzw. Produkten, insbesondere auch für Kleinserien.

## Patentansprüche

1. Verfahren zur Herstellung eines Pulvers, geeignet zur Verwendung in einem Verfahren zur schichtweisen werkzeuglosen Herstellung von dreidimensionalen Formkörpern, bei dem selektiv Bereiche der jeweiligen Pulverschicht durch den Eintrag elektromagnetischer Energie aufgeschmolzen werden, wobei das Herstellungsverfahren das Mischen eines Polymers oder Copolymers mit zumindest einem wasserlöslichen polymeren Polyol, das Lösen der Mischung in Wasser zur Bildung einer Dispersion, die Abtrennung der Polymer- oder Copolymer-Partikel aus der Dispersion, das Waschen und Trocknen der abgetrennten Polymer- oder Copolymer-Partikel umfasst, wobei das polymere Polyol ausgewählt ist aus einer Gruppe bestehend aus Polyethylenglykol und Polyvinylalkohol.

2. Verfahren nach Anspruch 1,
**dadurch gekennzeichnet,**
**dass** der Schritt des Waschens erfolgt, bis das aus den Polymer- oder Copolymer-Partikeln gebildete Pulver einen Gehalt von 0,001 Gew.-% bis 5 Gew.-% des Polyols, bezogen auf die Polymer- oder Copolymer-Partikel, enthält.

3. Verfahren nach einem der vorhergehenden Ansprüche,
**dadurch gekennzeichnet,**
**dass** das abgetrennte Pulver mit einem pulverförmigen Füllstoff vermischt wird, wobei der Anteil des Füllstoffes an der Gesamtmenge des Pulvers bis zu 70 Vol.-% beträgt.

4. Verfahren nach einem der vorhergehenden Ansprüche,
**dadurch gekennzeichnet,**
**dass** das Gewichtsverhältnis des Polymers oder Copolymers und des zumindest einen wasserlöslichen polymeren Polyols in der Dispersion zwischen 1 : 99 und 91 : 9 liegt, vorzugsweise von 1 : 5 bis 2 : 1 beträgt.

5. Pulver, geeignet zur Verwendung in einem Verfahren zur schichtweisen werkzeuglosen Herstellung von dreidimensionalen Formkörpern,
wobei das Pulver wenigstens ein Polymer- oder Copolymerpulver enthält, **dadurch gekennzeichnet, dass** das Polymer- oder Copolymerpulver einen Gehalt von 0,001 Gew.-% bis 5 Gew.-% eines polymeren Polyols enthält, wobei das polymere Polyol ausgewählt ist aus einer Gruppe bestehend aus Polyethylenglykol und Polyvinylalkohol,
**dadurch gekennzeichnet,**
**dass** das Pulver eine BET-Oberfläche nach DIN ISO 9277 kleiner oder gleich 10 m²/g aufweist.

6. Pulver nach Anspruch 5,
**dadurch gekennzeichnet,**
**dass** das Pulver zumindest einen pulverförmigen Füllstoff enthält, wobei der Anteil des Füllstoffes an der Gesamtmenge des Pulvers bis zu 70 Vol.-% beträgt.

7. Pulver nach einem der Ansprüche 5 bis 6,
**dadurch gekennzeichnet,**
**dass** Pulver einen mittleren Korndurchmesser zwischen 5 und 100 µm aufweist.

8. Pulver nach einem der Ansprüche 5 bis 7,
**dadurch gekennzeichnet,**
**dass** Pulver einen mittleren Korndurchmesser zwischen 8 und 80 µm aufweist.

9. Pulver nach einem der Ansprüche 5 bis 8,
**dadurch gekennzeichnet,**
**dass** das Pulver eine BET-Oberfläche nach DIN ISO 9277 kleiner oder gleich 3 m²/g aufweist.

10. Pulver nach einem der Ansprüche 5 bis 9,
**dadurch gekennzeichnet,**
**dass** das Pulver eine BET-Oberfläche nach DIN ISO 9277 kleiner oder gleich 1 m²/g aufweist.

11. Pulver nach einem der Ansprüche 5 bis 10,
**dadurch gekennzeichnet,**
**dass** das Pulver eine Schüttdichte nach DIN 53466 zwischen 300 und 700 g/l aufweist.

12. Pulver nach einem der Ansprüche 5 bis 11,
**dadurch gekennzeichnet,**
**dass** das Pulver eine Korngrößenverteilung d90 zu d10 zwischen 3 : 1 und 15 : 1 aufweist.

13. Pulver nach einem der Ansprüche 5 bis 12,
**dadurch gekennzeichnet,**
**dass** das Pulver Rieselhilfsmittel enthält.

14. Pulver nach einem der Ansprüche 5 bis 13,
**dadurch gekennzeichnet,**
**dass** das Pulver als Füllstoff anorganische Partikel enthält.

15. Pulver nach einem der Ansprüche 5 bis 14,
**dadurch gekennzeichnet,**
**dass** das Pulver organische und/oder anorganische Pigmente enthält.

16. Pulver nach einem der Ansprüche 5 bis 15,
**dadurch gekennzeichnet,**
**dass** das Pulver Ruß und/oder Titandioxid enthält.

17. Verfahren oder Pulver nach einem der vorhergehenden Ansprüche,
**dadurch gekennzeichnet,**
**dass** das Polyethylenglykol eine Molmasse von 2000 bis 2000000 g/mol, vorzugsweise von 7000 bis 250000 g/mol, besonders bevorzugt von 9000 bis 100000 g/mol aufweist.

18. Verfahren oder Pulver nach einem der vorhergehenden Ansprüche,
**dadurch gekennzeichnet,**
**dass** das Polyethylenglykol eine Mischung aus Polyethylenglykolen unterschiedlicher Molmassen enthält.

19. Verfahren oder Pulver nach einem der vorhergehenden Ansprüche,
**dadurch gekennzeichnet,**
**dass** das Polymer- oder Copolymer ein PEEK, ein PAEK, ein PSU, ein PPSU, ein Polyamid, ein aliphatisches oder aromatisches Polyester, ein aliphatisches, cycloaliphatisches oder aromatisches Polyamid, ein Copolyamid, oder Mischungen daraus, enthält.

20. Verfahren oder Pulver nach Anspruch 19,
**dadurch gekennzeichnet,**
**dass** das Polyamid ein höherschmelzendes Polyamid, ein PA1010, ein PA610, ein PA6, ein PA66, ein PA46, oder Mischungen daraus, enthält.

21. Verwendung eines Pulvers nach einem der Ansprüche 5 bis 20 in einem Verfahren zur schichtweisen werkzeuglosen Herstellung von dreidimensionalen Formkörpern, bei dem selektiv Bereiche der jeweiligen Pulverschicht durch den Eintrag elektromagnetischer Energie aufgeschmolzen werden.

22. Formkörper, hergestellt durch die Verwendung eines Pulvers nach irgendeinem der Ansprüche 5 bis 20 in einem Verfahren zur schichtweisen werkzeuglosen Herstellung von dreidimensionalen Formkörpern, bei dem selektiv Bereiche der jeweiligen Pulverschicht durch den Eintrag elektromagnetischer Energie aufgeschmolzen werden.

23. Formkörper nach Anspruch 22, **dadurch gekennzeichnet, dass** der Formkörper einen Gehalt von 0,0005 Gew.-% bis 5 Gew.-% an Polyol aufweist.

## Claims

1. Process for production of a powder, suitable for use in a process for the layer-by-layer moldless production of a three-dimensional shaped article, in which regions of the respective powder layer are selectively melted via input of electromagnetic energy, the production process comprising the mixing of a polymer or copolymer with at least one water-soluble polymeric polyol, the dissolution of the mixture in water to form a dispersion, the isolation of the polymer particles or copolymer particles from the dispersion, and the washing and drying of the isolated polymer particles or isolated copolymer particles, the polymeric polyol having been selected from a group comprising polyethylene glycol and polyvinyl alcohol.

2. Process according to Claim 1,
**characterized in that**
the washing step takes place until the powder formed from the polymer particles or copolymer particles has from 0.001% by weight to 5% by weight content of the polyol, based on the polymer particles or copolymer particles.

3. Process according to any one of the preceding claims,
**characterized in that**
the isolated powder is mixed with a pulverulent filler, the filler content of the entire amount of the powder being up to 70% by volume.

4. Process according to any one of the preceding claims,
**characterized in that**
the ratio by weight of the polymer or copolymer and of the at least one water-soluble polymeric polyol in the dispersion is from 1:99 to 91:9, preferably from 1:5 to 2:1.

5. Powder, suitable for use in a process for the layer-by-layer moldless production of a three-dimensional shaped article,
the powder comprising at least one polymer powder or copolymer powder **characterized in that** the polymer powder or copolymer powder has from 0.001% by weight to 5% by weight content of a polymeric polyol, the polymeric polyol having been selected from a group comprising polyethylene glycol and polyvinyl alcohol,
**characterized in that**
the BET surface area of the powder to DIN ISO 9277 is smaller than or equal to 10 m²/g.

6. Powder according to Claim 4,
**characterized in that**
the powder comprises at least a pulverulent filler, the filler content of the entire amount of the powder being up to 70% by volume.

7. Powder according to any one of Claims 5 to 6,
**characterized in that**
the median grain diameter of the powder is from 5 to 100 µm.

8. Powder according to any one of Claims 5 to 7,
**characterized in that**
the median grain diameter of the powder is from 8 to 80 µm.

9. Powder according to any one of Claims 5 to 8,
**characterized in that**
the BET surface area of the powder to DIN ISO 9277 is smaller than or equal to 3 m²/g.

10. Powder according to any one of Claims 5 to 9,
**characterized in that**
the BET surface area of the powder to DIN ISO 9277 is smaller than or equal to 1 m²/g.

11. Powder according to any one of Claims 5 to 10,
**characterized in that**
the bulk density of the powder to DIN 53466 is from 300 to 700 g/l.

12. Powder according to any one of Claims 5 to 11,
**characterized in that**
the d90 to d10 grain size distribution of the powder is from 3:1 to 15:1.

13. Powder according to any one of Claims 5 to 12,
**characterized in that**
the powder comprises powder-flow aid.

14. Powder according to any one of Claims 5 to 13,
**characterized in that**
the powder comprises inorganic particles as filler.

15. Powder according to any one of Claims 5 to 14,
**characterized in that**
the powder comprises organic and/or inorganic pigments.

16. Powder according to any one of Claims 5 to 15,
**characterized in that**
the powder comprises carbon black and/or titanium dioxide.

17. Process or powder according to any one of the preceding claims,
**characterized in that**
the molar mass of the polyethylene glycol is from 2000 to 2 000 000 g/mol, preferably from 7000 to 250 000 g/mol, particularly preferably from 9000 to 100 000 g/mol.

18. Process or powder according to any one of the preceding claims,
**characterized in that**
the polyethylene glycol comprises a mixture composed of polyethylene glycols of different molar masses.

19. Process or powder according to any one of the preceding claims,
**characterized in that**
the polymer or copolymer comprises a PEEK, a PAEK, a PSU, a PPSU, a polyamide, an aliphatic or aromatic polyester, an aliphatic, cycloaliphatic, or aromatic polyamide, a copolyamide, or a mixture thereof.

20. Process or powder according to Claim 19,
**characterized in that**
the polyamide comprises a relatively high-melting-point polyamide, a PA1010, a PA610, a PA6, a PA66, a PA46, or a mixture thereof.

21. Use of a powder according to any one of Claims 5 to 20 in a process for the layer-by-layer moldless production of a three-dimensional shaped article, in which regions of the respective powder layer are selectively melted via input of electromagnetic energy.

22. Shaped article, produced via the use of a powder according to any one of Claims 5 to 20 in a process for the layer-by-layer moldless production of a three-dimensional shaped article, in which regions of the respective powder layer are selectively melted via input of electromagnetic energy.

23. Shaped article according to Claim 22, **characterized in that** the shaped article has from 0.0005% by weight to 5% by weight content of polyol.

## Revendications

1. Procédé pour la préparation d'une poudre, appropriée pour être utilisée dans un procédé pour la fabrication par couches, sans outils, de corps façonnés tridimensionnels, dans lequel des zones sélectives de chaque couche de poudre sont fondues par l'introduction d'énergie électromagnétique, le procédé de préparation comprenant le mélange d'un polymère ou d'un copolymère avec au moins un polyol polymère soluble dans l'eau, la dissolution du mélange dans l'eau pour former une dispersion, la séparation des particules de polymère ou de copolymère de la dispersion, le lavage et le séchage des particules de polymère ou de copolymère séparées, le polyol polymère étant choisi dans un groupe constitué par le polyéthylèneglycol et le poly(alcool vinylique).

2. Procédé selon la revendication 1, **caractérisé en ce que** l'étape de lavage est réalisée jusqu'à ce que la poudre formée à partir des particules de polymère ou de copolymère contienne une teneur de 0,001% en poids à 5% en poids du polyol, par rapport aux particules de polymère ou de copolymère.

3. Procédé selon l'une quelconque des revendications précédentes, **caractérisé en ce que** la poudre séparée est mélangée avec une charge sous forme de poudre, la proportion de charge par rapport à la quantité totale de la poudre représentant jusqu'à 70% en volume.

4. Procédé selon l'une quelconque des revendications précédentes, **caractérisé en ce que** le rapport pondéral du polymère ou du copolymère et dudit au moins un polyol polymère soluble dans l'eau dans la dispersion est situé entre 1:99 et 91:9 et vaut de préférence 1:5 à 2:1.

5. Poudre, appropriée pour être utilisée dans un procédé pour la fabrication par couches, sans outils, de corps façonnés tridimensionnels, la poudre contenant au moins une poudre de polymère ou de copolymère, **caractérisée en ce que** la poudre de polymère ou de copolymère contient une teneur de 0,001% en poids à 5% en poids d'un polyol polymère, le polyol polymère étant choisi dans un groupe constitué par le polyéthylèneglycol et le poly(alcool vinylique), **caractérisée en ce que** la poudre présente une surface BET selon la norme DIN ISO 9277 inférieure ou égale à 10 m²/g.

6. Poudre selon la revendication 5, **caractérisée en ce que** la poudre contient au moins une charge sous forme de poudre, la proportion de charge par rapport à la quantité totale de poudre représentant jusqu'à 70% en volume.

7. Poudre selon l'une quelconque des revendications 5 à 6, **caractérisée en ce que** la poudre présente un diamètre moyen de particule entre 5 et 100 µm.

8. Poudre selon l'une quelconque des revendications 5 à 7, **caractérisée en ce que** la poudre présente un diamètre de particule moyen entre 8 et 80 µm.

9. Poudre selon l'une quelconque des revendications 5 à 8, **caractérisée en ce que** la poudre présente une surface BET selon la norme DIN ISO 9277 inférieure ou égale à 3 m²/g.

10. Poudre selon l'une quelconque des revendications 5 à 9, **caractérisée en ce que** la poudre présente une surface BET selon la norme DIN ISO 9277 inférieure ou égale à 1 m²/g.

11. Poudre selon l'une quelconque des revendications 5 à 10, **caractérisée en ce que** la poudre présente une densité apparente selon la norme DIN 53466 entre 300 et 700 g/l.

12. Poudre selon l'une quelconque des revendications 5 à 11, **caractérisée en ce que** la poudre présente une distribution granulométrique d90:d10 entre 3:1 et 15:1.

13. Poudre selon l'une quelconque des revendications 5 à 12, **caractérisée en ce que** la poudre contient des adjuvants d'écoulement.

14. Poudre selon l'une quelconque des revendications 5 à 13, **caractérisée en ce que** la poudre contient des particules inorganiques comme charge.

15. Poudre selon l'une quelconque des revendications 5 à 14, **caractérisée en ce que** la poudre contient des pigments organiques et/ou inorganiques.

16. Poudre selon l'une quelconque des revendications 5 à 15, **caractérisée en ce que** la poudre contient de la suie et/ou du dioxyde de titane.

17. Procédé ou poudre selon l'une quelconque des revendications précédentes, **caractérisé en ce que** le polyéthylèneglycol présente une masse molaire de 2000 à 2.000.000 g/mole, de préférence de 7000 à 250.000 g/mole, de manière particulièrement préférée de 9000 à 100.000 g/mole.

18. Procédé ou poudre selon l'une quelconque des revendications précédentes, **caractérisé en ce que** le polyéthylèneglycol contient un mélange de polyéthylèneglycols présentant des masses molaires différentes.

19. Procédé ou poudre selon l'une quelconque des revendications précédentes, **caractérisé en ce que** le polymère ou le copolymère contient une PEEC, une PAEC, une PSU, une PPSU, un polyamide, un polyester aliphatique ou aromatique, un polyamide aliphatique, cycloaliphatique ou aromatique, un copolyamide ou leurs mélanges.

20. Procédé ou poudre selon la revendication 19, **caractérisé en ce que** le polyamide contient un polyamide à point de fusion élevé, un PA1010, un PA610, un PA6, un PA66, un PA46 ou leurs mélanges.

21. Utilisation d'une poudre selon l'une quelconque des revendications 5 à 20 dans un procédé pour la fabrication par couches, sans outils, de corps façonnés tridimensionnels, dans lequel des zones sélectives de chaque couche de poudre sont fondues par introduction d'énergie électromagnétique.

22. Corps façonné fabriqué par l'utilisation d'une poudre selon l'une quelconque des revendications 5 à 20 dans un procédé pour la fabrication par couches, sans outils, de corps façonnés tridimensionnels, dans lequel des zones sélectives de chaque couche de poudre sont fondues par introduction d'énergie électromagnétique.

23. Corps façonné selon la revendication 22, **caractérisé en ce que** le corps façonné présente une teneur de 0,0005% en poids à 5% en poids de polyol.
